# EUROPÄISCHE PATENTANMELDUNG

(11) **EP 0 859 157 A2**
(43) Veröffentlichungstag der Anmeldung: **19.08.1998**
(21) Anmeldenummer: 97115885.2
(22) Anmeldetag: 16.09.1997
(51) Int. Cl.: F16B 13/00

(54) **Dübeleinheit**

(30) Priorität: 13.02.1997 DE 19705499
(71) Anmelder: Tox-Dübel-Werk R.W. Heckhausen GmbH & Co. KG, D-78351 Bodman-Ludwigshafen (DE)
(72) Erfinder: Stoffel, Helmut, 78351 Bodman-Ludwigshafen (DE)
(74) Vertreter: Koch, Günther, Dipl.-Ing.

(57) **Zusammenfassung**

Bei einer aus Kopfschraube (10), Kunststoffdübel (14) und Metalldübelfuß (12) bestehenden Dübeleinheit greift das Gewinde der Schraube in ein entsprechendes Innengewinde des massiven Ringabschnitts des Metalldübels (12) ein. Die konische Spitze (22) der Schraube steht im Lieferzustand über die Stirnseite des Metalldübels vor. Der kopfseitige Teil des Metalldübels ist durch axiale Schlitze (34) in Spreizsegmente (30) unterteilt, die eine konische Innenfläche besitzen, in die das konische Ende des Kunststoffdübels eingreift. Axialrippen (41) des konischen Kunststoffdübelendes greifen in die Schlitze des Metalldübels ein und bewirken eine Drehsicherung.

Das konisch verlaufende Fußende des Metalldübels (12) ist mit einer Bohrkrone (26) versehen, die aus einer ringförmigen Anordnung von Zähnen (25) oder Zacken besteht, die dreieckig ausgebildet sind und zwischen denen dreieckige Zwischenräume verbleiben. Diese Zacken (25) oder Zähne besitzen radial und/oder axial verlaufende Schneiden, mit denen sie beim Einschlagen in das Mauerwerk eindringen können. Die Bohrkrone (26) geht in den spitzen Abschnitt der Schraube über, die bei bestimmungsgemäßer Anwendung über das Vorderende des Metalldübels vorsteht. Ein Konusring kann gegen das Kopfende der Schraube abgestützt sein und mit dem Konusende in die Kunststoffhülse einstehen.

## Beschreibung

Die Erfindung betrifft eine Dübeleinheit der im Oberbegriff des Patentanspruchs 1 angegebenen Gattung. Eine solche gebrauchsfertige Dübeleinheit ist aus der DE 44 32 658 A1 bekannt. Diese Dübeleinheit kann ohne Vorbohren in ein Mauerwerk aus Gasbeton oder unverputzten Hohlziegelsteinen eingeschlagen werden, während bei harten Baustoffen ein Vorbohren erforderlich ist. Die Dübeleinheit eignet sich zum Befestigen von Gegenständen in allen Baustoffen, und sie wird im Durchsteckverfahren verarbeitet. Bei der bekannten Dübeleinheit weist der ringförmige Dübelfuß des Metalldübels einen Endkonus mit einer Stirnringfläche auf, die benachbart zu dem konischen Ende der Kopfschraube zu liegen kommt.

Der vorliegenden Erfindung liegt die Aufgabe zugrunde, einen gattungsgemäßen Dübel derart auszubilden, daß die Einschlagfähigkeit verbessert wird.

Gelöst wird die gestellte Aufgabe durch die im Kennzeichnungsteil des Patentanspruchs 1 angegebenen Merkmale. Dadurch, daß die Stirnringfläche des konischen Dübelfußendes nach Art einer Bohrkrone gezackt ist, ergeben sich in ringförmiger Anordnung Schneidspitzen bzw. Schneidkanten, die selbst in härteres Mauerwerk eindringen können, nachdem das Loch beim Einschlagen der Schraubenspitze angesenkt ist. Während beim bekannten Dübel die Stirnringfläche sich stumpf auf dem Mauerwerk neben dem von der Schraubenspitze angesenkten Bohrung abstützte und einen gewissen Einschlagwiderstand bedingte, ermöglicht die Zackenausbildung der Krone ein Einschneiden in das Mauerwerk. Dieses Einschneiden kann sogar dann bewirkt werden, wenn die Dübeleinheit nicht eine Schraube mit zylindrischem, angespitztem Spanplattengewinde aufweist, sondern ein Schraubbolzen mit metrischem Gewinde Anwendung findet, der in ein entsprechend metrisch ausgebildetes Gewinde des Dübelfußes eingeschraubt wird. In diesem Fall kann die Bohrkrone selbst ohne Schraubenspitze eine Einschlagbohrung bilden.

Die Dübeleinheit, bestehend aus Schraube, Metalldübel und Kunststoffdübel, wird im zusammengebauten Zustand als Verkaufseinheit geliefert. Es ist jedoch klar, daß die genannten drei Teile auch separat dem Verbraucher angeboten und von diesem selbst zusammengesetzt werden können. Insbesondere ist es dabei möglich, den metallischen Dübelfuß mit zwei Innengewinden zu versehen, beispielsweise einem Spanplattengewinde und einem metrischen Gewinde, so daß wahlweise ein Schraubbolzen oder eine Kopfschraube Verwendung finden können.

Bevorzugt kommen bei der Dübeleinheit im Einsatz gehärtete Schrauben in Verbindung mit der Metallspitze zur Anwendung, die am Ende konisch ist und in die Spitzen meißelähnlicher Krallen übergehen, wodurch sich eine hohe Einschlagfestigkeit mit bohrähnlicher Wirkung ergibt.

Nach dem Einschlagen der Dübeleinheit bis zum Schraubenkopf wird die Schraube angezogen, und zwar so lange, bis der mit ihr festzulegende Gegenstand entsprechend verspannt ist.

Durch das Anziehen der Schraube wird die Metallspitze über das Schraubengewinde in Richtung auf den Schraubenkopf gezogen, und es entsteht ein Druck auf die Kunststoffhülse, die sich dann im Schlitzbereich aufbäumt bzw. im Hohlraum verknotet. Durch den Konus am Kunststoffhülsenende und das Aufbäumen bzw. Verknoten werden die Metallflügel des Metalldübel nach außen gedrückt, und es entsteht eine elastische Kunststoff- und eine feste Metallspreizung, die dem Befestigungsgegenstand einen sicheren Halt gibt.

Durch das in die Metallspitze eingearbeitete Gewinde ist eine formschlussige Verbindung von Metallspitze zur Schraube gegeben. Ein Überdrehen der Schraube ist unter normalen Umständen nicht möglich. Somit können maximale Haltewerte erreicht werden. Die erfindungsgemäße Dübeleinheit läßt sich rationell in allen Baustoffen verarbeiten und ergibt einen sicheren, dauerhaften Halt.

Um dem Benutzer die Endmontagestellung deutlich erkennbar zu machen und um eine kontrollierte Montage zu gewährleisten, kann ein Konusrlng auf die Schraube aufgeschoben und gegen den Schraubenkopf abgestützt sein, die sich beim Anziehen der Schraube in die Kunststoffhülse einschiebt und diese beim Einziehen in das Bohrloch derart spreizt, daß beim Verschwinden dieses metallischen Ringes im Bohrloch die Endmontage vollendet und die höchste Anzugskraft erreicht ist. Dieser Ring kann zur kontrollierbaren Montage auch bei anderen Sprelz-, Knick- oder Kombinationsdübeln Anwendung finden.

Nachstehend werden Ausführungsbeispiele anhand der Zeichnung beschrieben. In der Zeichnung zeigen:
Fig. 1 zeigt eine axial teilweise aufgeschnittene Ansicht einer erfindungsgemäß ausgebildeten Dübeleinheit mit einer Spanplattenschraube;
Fig. 2 Zeigt eine Teilansicht des Kopfteiles der erfindungsgemäßen Dubeleinheit mit eingesetztem Sechskantbolzen;
Fig. 3 zeigt eine Teilschnittansicht des Kopfteiles einer erfindungsgemäßen Dübeleinheit mit Konusspannring;

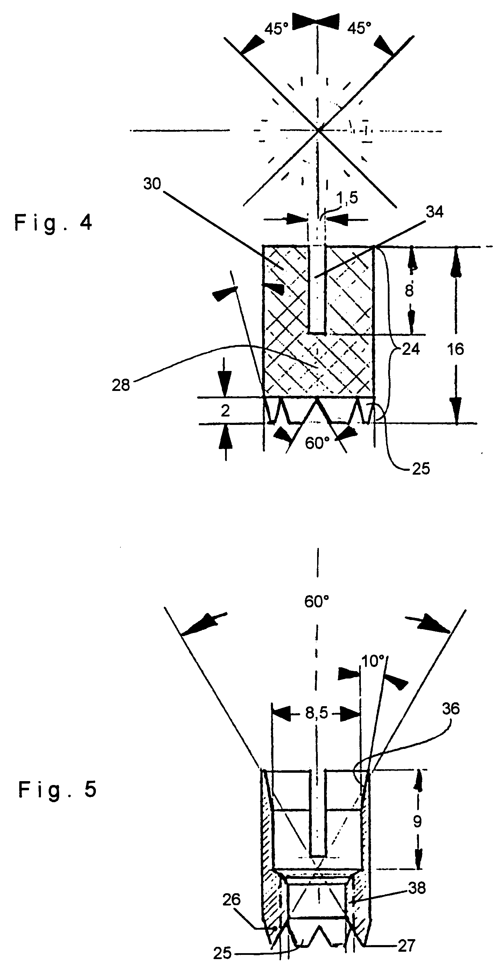

Fig. 4 ist eine Ansicht des den Dübelfuß bildenden Metalldübels;
Fig. 5 ist ein Axialschnitt des in Fig. 3 dargestellten Metalldübels.

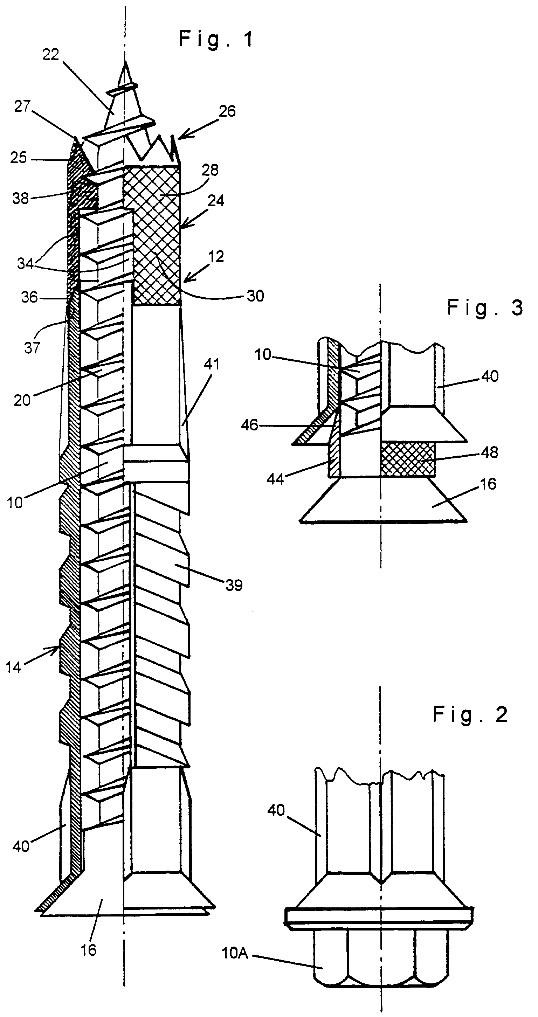

Die Dübeleinheit gemäß Fig. 1 besteht aus einer Spanplattenschraube 10, einem Metalldübel 12 und einem Kunststoffdübel 14. Diese Teile werden im zusammengeschraubten Zustand als Verkaufseinheit gemäß Fig. 1 geliefert, jedoch können die Teile auch separat dem Verbraucher angeboten und von diesem selbst zusammengesetzt werden.

Die Spanplattenschraube 10 weist einen Senkkopf 16 mit einem Schraubendreherschlitz, einem Kreuzschlitz oder einem Innensechskant auf. Die Schraube 10 besitzt ein zylindrisches Gewinde 20, welches im vorderen, aus dem Metalldübel 12 vorstehenden Ende in eine konische Einschlagspitze 22 übergeht.

Der Metalldübel 12 besteht aus einem ringförmigen Dübelfuß 24 mit Außenrändelung 28. Dieser zylindrische Abschnitt 24 geht nach vorn in einen konischen Abschnitt 26 über, der nach Art einer Bohrkrone mit Zähnen oder Zacken 25 versehen ist. Diese Zacken 25 sind dreieckig ausgebildet und bilden am Ende und im Innenbereich in Achsrichtung verlaufende Schneiden 27, die beim Einschlagen im Mauerwerk das Eindringen der Dübeleinheit erleichtern.

Dieser ringförmige Dübelfuß besitzt im hinteren Abschnitt axiale Schlitze 34, welche Spreizsegmente 30 bilden, die sich beim Eindrehen der Schraube gegen das Mauerwerk spreizen. Die Spreizsegmente weisen einen Innenkonus 36 auf, mit dem sie sich über das konisch ausgebildete Fußende 37 des Kunststoffdübels 14 schieben können. Ein dem Gewinde 20 der Schraube angepaßtes Innengewinde 38 erstreckt sich über den geschlossenen vorderen Ringteil des Metalldübels. Mit diesem Gewinde ist der Metalldübel 12 auf das vordere Ende des Gewindes 20 aufgeschraubt, wie dies aus Fig. 1 ersichtlich ist.

Der Kunststoffdübel 14 besteht aus einer geschlossenen Hülse, die auf der Außenseite in Achsrichtung verlaufende Rippen 40 im Kopfbereich, im Fußbereich Axialrippen 41 und dazwischen schraubenlinienförmig verlaufende Rippen 39 aufweist. Im Bereich der Axialrippen 41 ist das Fußende 37 des Kunftstoffdübels 14 konisch abgeflacht, so daß sich der Innenkonus 36 des Metalldübels darüberschieben kann, wobei die Rippen 41 in den Axialschlitzen 34 des Metalldübels zu liegen kommen und eine Drehsicherung bewirken.

Bei dem Ausführungsbeispiel nach Fig. 2 ist die Schraube als Sechskantbolzen 10A ausgebildet, wobei das Gewinde 38 im Metalldübel entsprechend als metrisches Gewinde ausgebildet ist. Stattdessen kann im Metalldübelfuß ein zylindrisches Doppelgewinde ausgebildet sein.

Fig. 3 zeigt einen Teilschnitt des Kopfteiles einer erfindungsgemäßen Dübeleinheit, bei der auf die Schraube 10 ein Konusspannring 44 aufgeschoben ist, der sich mit seiner hinteren Stirnringfläche am Senkkopf 16 abstützt und mit seinem vorderen Ringkonus 46 zwischen Kunststoffdübel 14 und Gewinde 20 einsteht. Der zylindrische Abschnitt des Konusringes 44 trägt eine Rändelung 48. Dieser Ring 44 hat die Funktion einer kontrollierten Montage.

Die Dübeleinheit kann in der aus Fig. 1 ersichtlichen Stellung in ein Mauerwerk aus Gasbeton oder unverputzten Hohllochziegelsteinen eingeschlagen werden, ohne daß ein Vorbohren erforderlich wäre, weil die Bohrkrone in Verbindung mit der Schraubenspitze 22 bei axialem Einschlagen das Mauerwerk entsprechend aufschneidet und verdrängt. Bei härteren Baustoffen ist ein Vorbohren zweckmäßig, wobei der Durchmesser des Bohrloches nicht genau angepaßt sein muß, sondern auch einen etwas kleineren Durchmesser besitzen kann, weil die Bohrlochaufweiterung durch die Bohrkrone 26 erfolgt. Ein zu groß gewählter Lochdurchmesser ist ebenfalls unkritisch, weil beim Anziehen der Schraube über die Konusverbindung 36 ein Aufspreizen des Metalldübels erfolgt, so daß sich die aufgespreizten Segmente 30 sicher an der Bohrlochwandung abstützen können und der Kunststoffdübel durch die axiale Verspannung radial ausgeweitet wird.

Der Dübel wird im Durchsteckverfahren bis ans Ende der Kunststoffhülse 14 (Setzmarkierung) eingeschlagen, so daß Metallring 44 und Schraubenkopf 16 überstehen.

Durch das Anziehen der Schraube 10 wird der Metallring 44 in die Kunststoffhülse eingedrückt, und es muß so lange geschraubt werden, bis der Schraubenkopf 16 mit dem Befestigungsgegenstand bündig ist.

Dadurch ist gewährleistet, daß der Dübel nicht nur eingeschlagen, sondern auch mit dem richtigen Drehmoment verschraubt ist.

Um ein Aufspreizen des Kunststoffdübels in der Bohrlochwandung bei axialer Stauchung zu erleichtern, ist der Kunststoffdübel über einen Teil seiner axialen Länge, insbesondere im Bereich der schraubenlinienförmig verlaufenden Rippen 39, mit mehreren im gleichen Winkelabstand angeordneten Schlitzen, insbesondere mit drei Schlitzen, ausgestattet, die eine entsprechende Zahl von Spreizsegmenten bilden, mit denen der Dübel gegen die Bohrlochwandung gespreizt werden kann.

### Bezugszeichenliste

- 10: Spanplattenschraube
- 10A: Sechskantbolzen
- 12: Metalldübel
- 14: Kunststoffdübel
- 16: Senkkopf
- 20: zylindrisches Gewinde
- 22: konische Einschlagspitze
- 24: ringförmiger Dübelfuß
- 25: Zähne
- 26: konischer Abschnitt / Bohrkrone
- 27: Schneiden
- 28: Außenrändelung
- 30: Spreizsegmente
- 34: Axialschlitze
- 36: Innenkonus
- 37: Fußende
- 38: Innengewinde
- 39: schraubenlinienförmige Rippen
- 40: Rippen
- 41: Axialrippen
- 44: Konusspannring / Metallring
- 46: vorderer Ringkonus
- 48: Rändelung

## Patentansprüche

1. Dübeleinheit, bestehend aus:
- einer Kopfschraube (10),
- einem von der Kopfschraube (10) durchsetzten aufspreizbaren und/oder ausknickbaren und/oder verknotbaren Kunststoffdübel (14) und
- einem Metalldübel (12), der durch axiale Schlitze (34) gebildete Spreizsegmente (30) aufweist und in dessen Innengewinde (38) die Kopfschraube (10) unter axialer Verspannung des Kunststoffdübels (14) einschraubbar ist, wobei eine Drehsicherung zwischen Kunststoffdübel und Metalldübel durch eine axiale Nut-Feder-Verbindung (40, 30) hergestellt ist,
dadurch gekennzeichnet, daß das Vorderende des Metalldübels (12) eine aus einer ringförmigen Anordnung von Zähnen oder Zacken (25) bestehende Bohrkrone (26) aufweist.

2. Dübeleinheit nach Anspruch 1,
dadurch gekennzeichnet, daß die Zähne (25) der Bohrkrone (26) außenseitig von einer Konusfläche begrenzt sind.

3. Dübeleinheit nach den Ansprüchen 1 und 2,
dadurch gekennzeichnet, daß die Zähne (25) der Bohrkrone (26) radial und/oder axial und/oder schräg verlaufende Schneiden (27) aufweisen.

4. Dübeleinheit nach einem der Ansprüche 1 bis 3,
dadurch gekennzeichnet, daß der Kunststoffdübel im Kopfbereich axiale Rippen (40), im Fußbereich axiale Rippen (41) und dazwischen schraubenlinienförmig verlaufende Rippen (39) aufweist.

5. Dübeleinheit nach Anspruch 4,
dadurch gekennzeichnet, daß der Kunststoffdübel im Bereich der schraubenlinienförmigen Rippen (39) mit axialen Schlitzen versehen ist, welche über einen bestimmten Abschnitt Spreizsegmente bilden.

6. Dübeleinheit nach den Ansprüchen 1 bis 5,
dadurch gekennzeichnet, daß das Innengewinde des Metalldübels ein zylindrisches Doppelgewinde ist.

7. Dübeleinheit, insbesondere nach Anspruch 1,
gekennzeichnet durch einen Konusring (44), der auf die Schraube aufschiebbar und gegen den Schraubenkopf (16) abstützbar ist und mit ihrem vorderen Ringkonus (46) in den Kunststoffmantel (14) einschiebbar ist.

8. Dübeleinheit nach Anspruch 7,
dadurch gekennzeichnet, daß der Ringkonus so bemessen und beschaffen ist, daß er die Funktion einer kontrollierten Montage beim Einschrauben hat.

9. Dübeleinheit nach den Ansprüchen 7 und 8,
dadurch gekennzeichnet, daß die Außenseite des Rings (44) eine Rändelung (48) trägt.
